Europäisches Patentamt

European Patent Office

Office européen des brevets

(11) Publication number: **0 249 430 B1**

# EUROPEAN PATENT SPECIFICATION

(45) Date of publication of patent specification: **17.04.91**   (51) Int. Cl.⁵: **B65G 29/00**, B65G 47/52

(21) Application number: **87305054.6**

(22) Date of filing: **08.06.87**

(54) Conveyor systems.

(30) Priority: **13.06.86 JP 137718/86**

(43) Date of publication of application:
**16.12.87 Bulletin 87/51**

(45) Publication of the grant of the patent:
**17.04.91 Bulletin 91/16**

(84) Designated Contracting States:
**DE FR GB IT NL**

(56) References cited:
**DE-A- 3 122 849**
**GB-A- 1 527 491**
**JP-A- 6 293 118**

(73) Proprietor: **SONY CORPORATION**
**7-35 Kitashinagawa 6-Chome Shinagawa-ku**
**Tokyo 141(JP)**

(72) Inventor: **Usui, Motosuke Patents Division**
**Sony Corporation 6-7-35 Kitashinagawa**
**Shinagawa-ku Tokyo 141(JP)**

(74) Representative: **Thomas, Christopher Hugo et al**
**D Young & Co 10 Staple Inn**
**London WC1V 7RD(GB)**

## Description

This invention relates to conveyor systems comprising a transporting direction controlling device.

Various conveyor systems are employed, for example in factories for transporting objects such as manufactured products and parts to be assembled. In many cases, the required transporting paths are not straight. Also, the conveyor systems may include junctions for selectively transporting the objects through one of a plurality of transporting paths. In such cases, it is required to change the transporting direction. To do this, various arrangements and devices are known. For example, a curved conveyor can be used. Also, a guide for guiding the objects to be conveyed can be used for controlling the transporting direction, or a pusher can be used for pushing the objects to change or switch the transporting direction. Furthermore, control of the transporting direction can be achieved using a cross-conveyor.

However, such known conveyor systems are not always satisfactorily compact and efficient for factory use.

Our Japanese patent specification JP-A-62-93118 (published 28 April 1987) discloses a conveyor system similar to the pre-characterizing part of claim 1.

According to the present invention there is provided a conveyor system for conveying an object, the system comprising a first conveyor and a transporting direction controlling device, which device comprises:
rotor means, rotatable about a rotation axis, for conveying said object, said rotor means having an upper surface substantially perpendicular to said rotation axis and having a point on said upper surface to contact said object, said rotation axis being angularly offsettable for determining the orientation of said point;
driving means for rotatingly driving said rotor means; and
means for controlling the inclination of said upper surface of said rotor means so determining the orientation of said point on said upper surface and hence the direction in which said rotor means conveys said object;
characterized by:
means associated with said first conveyor and located upstream of said direction controlling device for reading direction-determining data on said object; and
circuit means for controlling said inclination controlling means in dependence on said read data, so controlling the direction in which said direction controlling device conveys said object in dependence on said read data.

The invention will now be described by way of example with reference to the accompanying drawings, throughout which like parts are referred to by like references, and in which:

Figure 1 is a sectional view of a transporting direction controlling device according to JP-A-62-93118;
Figure 2 is a plan view of a rotor therein;
Figures 3(A), 3(B), 3(C) and 3(D) are fragmentary perspective views of the rotor;
Figure 4 is a sectional view similar to Figure 1, but showing the operating condition thereof;
Figure 5 is a fragmentary perspective view of a conveyor system according to JP-A-62-93118;
Figure 6 is a partial plan view of the conveyor system of Figure 5;
Figure 7 is a part section, part left side elevation of the conveyor system of Figure 5;
Figure 8 is a bottom view of a transporting direction controlling device in the conveyor system of Figure 5;
Figure 9 is a right side elevation of the conveyor system of Figure 5;
Figure 10 is a partially sectioned rear elevation of the conveyor system of Figure 5;
Figure 11 is a front elevation of a transporting direction controlling device in the conveyor system of Figure 5;
Figures 12 to 15 show variations of the transporting direction controlling device; and
Figure 16 is a diagram of part of an embodiment of conveyor system according to the present invention.

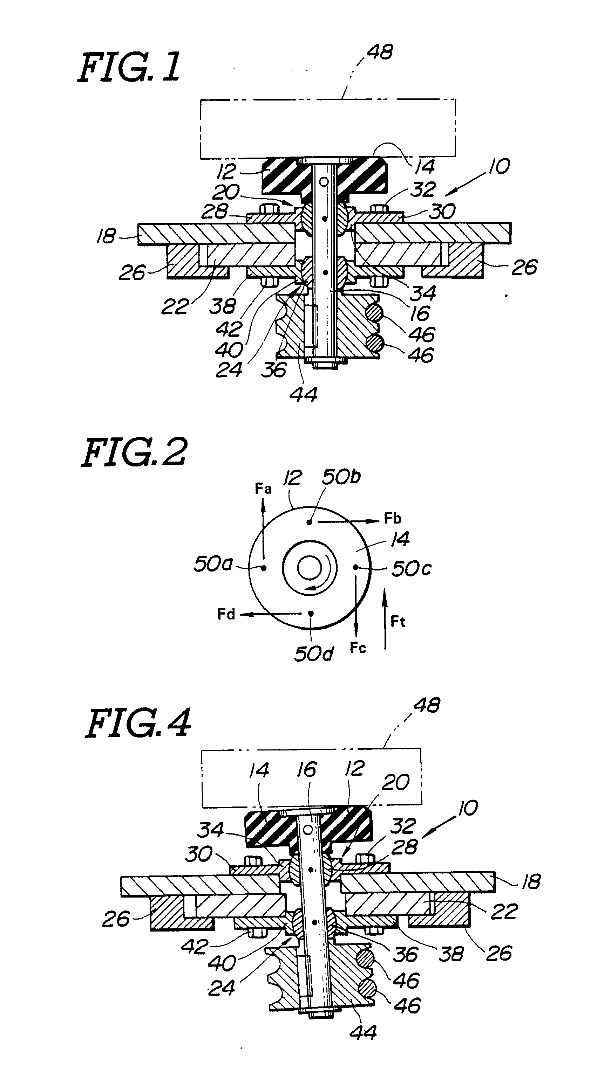

Referring initially to Figure 1, à transporting direction controlling device which is applicable to an embodiment of conveyor system according to the present invention, comprises a rotor assembly 10 having a generally cylindrical or disc-shaped rotor 12 having an upper plane surface 14 lying substantially perpendicular to the rotary axis thereof. The rotor 12 is fixed onto the top of a rotary shaft 16 for rotation therewith. The shaft 16 extends through a stationary base 18 and is rotatably supported thereon by means of a self-alignment bearing assembly 20. Also, the shaft 16 is supported on a movable plate 22 by means of a self-alignment bearing assembly 24. The movable plate 22 is movably supported beneath the stationary base 18 by a guide member 26.

The bearing assembly 20 comprises a bearing ball 28 fixed to the shaft 16 for rotation therewith, and a bearing seat member 30 fixed onto the base 18 by fastening bolts 32. The bearing seat member 30 defines a ball rest 34 which conforms with the bearing ball 28. With the bearing assembly 20, the shaft 16 is pivotally supported with respect to the base 18. On the other hand, the bearing assembly 24 comprises a bearing ball 36 fixed to the shaft 16 for rotation therewith, and a bearing seat member 38 with a ball rest 40. The bearing seat member 38 is fixed onto the movable plate 22 by fastening bolts 42 for movement therewith. Therefore, the shaft 16 is pivotable with respect to the movable plate 22, so that it is universally pivotable about the bearing assembly 20 according to the position of the movable plate 22.

A driven pulley 44 is fixed to the lower end of the shaft 16 for rotation therewith. The driven pulley 44 is connected to a drive motor (not shown) through a power train including driving belts 46. Therefore, the rotor 12 is driven by the driving torque transmitted from the drive motor through the driving belts 46, the driven pulley 44 and the shaft 16.

The rotor 12 is preferably formed of a high friction material, such as rubber, so as to assure control of the transporting direction. However, it would be also possible to form the rotor 12 of a low friction material, such as metal or synthetic resin. In such a case, high friction material, such as rubber sheet, would preferably be stuck on the upper plane surface 14. The plane surface 14 of the rotor 12 forms a contact surface to contact an object 48, such as a product or a part, to be transferred by the conveyor system.

The rotor 12 is tiltable according to the pivoted position of the shaft 16. The upper plane surface 14 of the rotor 12 is thus tiltable in various tilt directions. The rotor 12 as tilted contacts the object 48 at a contact point 50 on the plane surface 14 oriented at about the uppermost position. As will be seen from Figure 2, depending upon the orientation of the contact point 50, the direction of the force exerted on the object 48 becomes different, because the force exerted on the object 48 is always directed in a tangential direction.

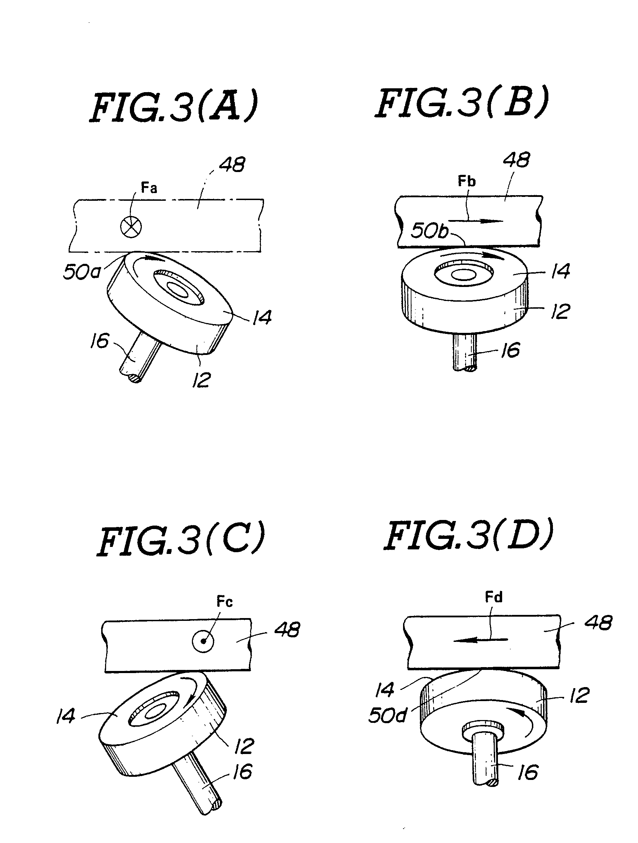

Therefore, when a point 50a is positioned at the uppermost position to serve as the contact point, a force in the direction Fa is exerted on the object 48 to push it in the direction Fa. Therefore, assuming the object's transporting direction in an upstream conveyor (not shown) is in the direction Ft, the object 48 is pushed forwardly by the force at the point 50a, as shown in Figures 2 and 3(A). When a point 50b is positioned at the uppermost position to serve as the contact point, the force in the direction Fb is exerted on the object 48 to push it in the direction Fb. Therefore, the object 48 is pushed to the left by the force at the point 50b, as shown in Figures 2 and 3(B). When a point 50c is positioned at the uppermost position to serve as the contact point, a force in the direction Fc is exerted on the object 48 to push it in the direction Fc. Therefore, the object 48 is pushed backward by the force at the contact point 50c, as shown in Figures 2 and 3(C). When a point 50d is positioned at the uppermost position to serve as the contact point, a force in the direction Fd is exerted on the object 48 to push it in the direction Fd. Therefore, the object 48 is pushed to the right by the force at the point 50d, as shown in Figures 2 and 3(D).

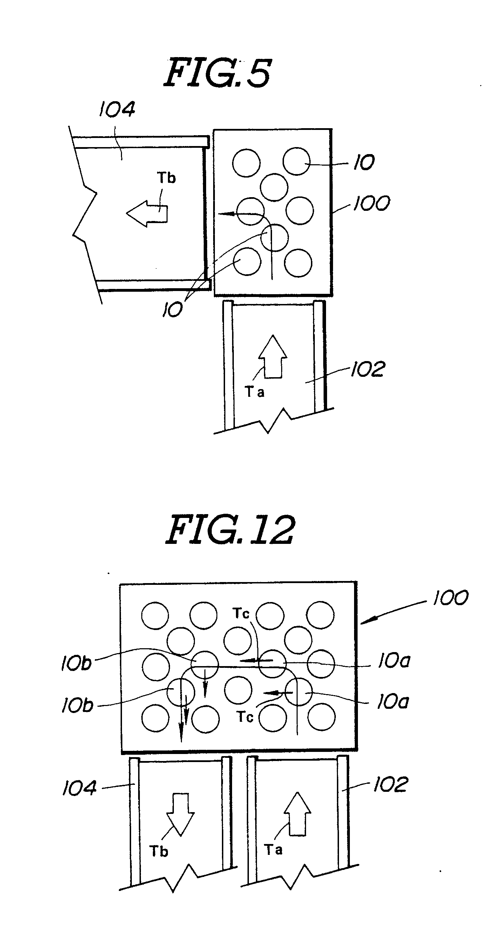

In order to change the orientation of the contact point 50, the tilt direction of the upper plane surface 14 can be changed by pivoting the shaft 16 about the bearing assembly 20. To pivot the shaft 16, the movable plate 22 is shifted in a required direction by means of an associated actuator (not shown). For instance, in the example of Figure 4, the movable plate 22 is shifted towards the left to incline the rotary shaft 16 to the right. As a result, the left end portion is positioned at the uppermost position to serve as the contact point 50.

As the shaft 16 with the rotor 12 is tiltable in any direction, the tilting direction can be specified according to the required transporting direction. Furthermore, although the the transporting direction is controlled by changing the orientation of the contact point 50, it would also be possible to change the transporting direction by switching the rotating direction of the rotor 12. Namely, when the rotating direction of the rotor 12 in Figure 2 is reversed to rotate in the counter-clockwise direction, the directions Fa, Fb, Fc and Fd are reversed. Therefore, by the combination of the rotor rotating direction and the orientation of the contact point 50, the transporting direction can be changed. For example, in the case of Figure 2, it would be sufficient to switch the orientation of the contact point 50 between the points 50a and 50b to switch or translate the transporting directions between forward, left, backward and right directions, by reversing the rotating direction of the rotor 12.

Figures 5 to 10 show a conveyor system with a transporting direction controlling station 100. In this system, the objects transferred in the direction Ta by an upstream conveyor 102 are transferred to a downstream conveyor 104 to transport the objects in a perpendicular direction Tb. Therefore, the transporting direction has to be changed by 90o in the transporting direction controlling station 100.

In order to change the transporting direction, a plurality of rotor assemblies 10 forming transporting direction controlling devices, are arranged in the transporting direction controlling station 100, and each of the rotor assembles 10 has a rotor tilt direction for controlling the transporting direction from the Ta direction to the Tb direction.

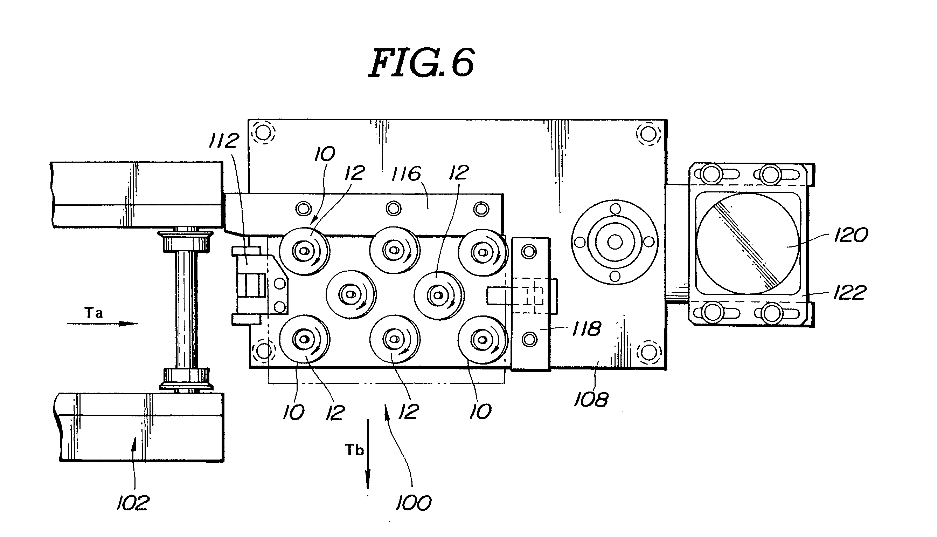

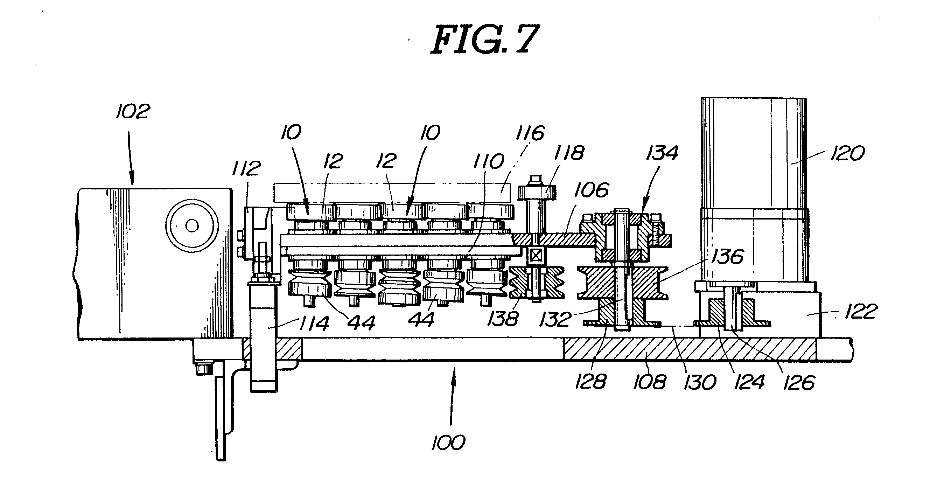

As shown in Figures 6 and 7, the plurality of rotor assemblies 10 are mounted on a common stationary base plate 106, which is fixedly supported on a base 108 by support frames (not shown). Each of the rotor assemblies 10 is of substantially identical construction to that described with reference to Figures 1 to 4. Therefore, the rotors 12 of the rotor assemblies 10 are arranged on the base plate 106. Also, the rotor assemblies 10 are supported on a movable plate 110 which is arranged beneath the base plate 106 and is movable relative to the base plate 106. At the upstream end of the transporting direction controlling station 100, a stop 112 is provided for blocking the objects to be fed thereinto. The stop 112 is associated with an actuation cylinder 114 to be moved up and down. When the actuation cylinder 114 is activated to raise the stop 112, it blocks objects from being transported into the transporting direction controlling station 100. On the other hand, when the actuation cylinder 114 is deactivated, the stop 112 is in a downwardly shifted position to allow the objects to enter the transporting direction controlling station 100. Guide plates 116 and 118 are also provided above the base plate 106 for defining the transporting path in the transporting direction controlling station 100 for the objects. As will be seen from Figures 6 and 7, the guide plate 116 extends perpendicular to the guide plate 118 for defining a perpendicularly bent transporting path in the transporting direction controlling station 100.

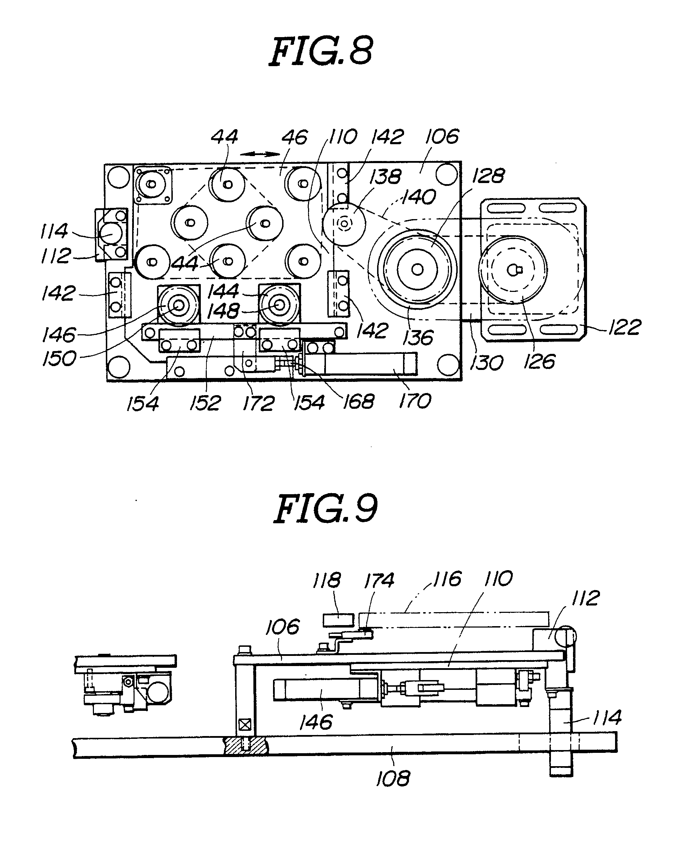

Beneath the movable base plate 110, are arranged the driven pulleys 44 of the rotor assemblies 10. To drive the driven pulleys 44 of the rotor assemblies 10, a drive motor 120 is mounted on the base 108 and fixed thereto by a mounting bracket 122. A driving sprocket 124 is fixed to a drive shaft 126 of the drive motor 120. The driving sprocket 124 is connected to a power transmission gear 128 via a drive chain 130. The gear 128 is fixed to a rotary shaft 132 supported on the base plate 106 by a bearing 134. To the shaft 132, a drive pulley 136 is also fixed for rotation therewith. As shown in Figures 7 and 8, the drive pulley 136 is connected to an intermediate pulley 138 by a driving belt 140. The intermediate pulley 138 is, in turn, connected to respective driven pulleys 44 via a driving belt 46. As particularly shown in Figure 8, a single driving belt 46 is employed for connecting respective driven pulleys 44. The driving belt 46 is wound around respective driven pulleys 44 in such a manner that it may drive respective driven pulleys 44 at the same speed in the same rotating direction. Therefore, all of the rotors 12 are driven at the same speed in the same direction.

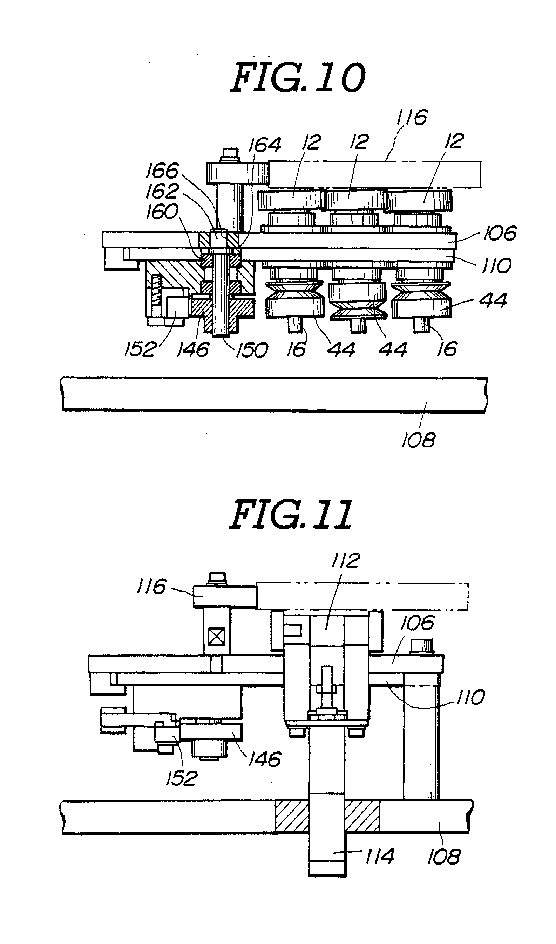

As shown in Figure 8, the movable plate 110 is movably supported by means of a plurality of guide channels 142 which are rigidly fixed into the lower surface of the base plate 106. A pair of pinions 144 and 146 are rotatably supported by means of pinion shafts 148 and 150 extending from the movable base plate 110. Respective pinions 144 and 146 engage with a rack plate 152 which is supported by means of guide channels 154. The guide channels 154 are fixed to the movable plate 110. As shown in Figure 10, eccentric cams 160 are fixed to the pinion shafts 148 and 150 for rotation therewith. The cams 160 have eccentric pins 162 extending upwardly from the upper surface thereof. The eccentric pins 162 are offset from the axes of the pinion shafts 148 and 150. The cams 160 are firmly engaged with holes 164 formed through the movable plate 110. On the other hand, the top end of the eccentric pins 162 engage with apertures 166 formed through the base plate 106.

The rack plate 152 is connected to an actuation rod 168 of an actuation cylinder 170 through a connecting bracket 172. Therefore, the rack plate 152 is driven by the actuation cylinder 168 in a direction towards and away from the upstream conveyor 102.

For shifting the movable base plate 110, the actuation cylinder 170 is activated to drive the rack plate 152 towards and away from the upstream conveyor 102. By this thrusting movement of the rack plate 152, the pinions 144 and 146 are driven to rotate. Therefore, the pinion shafts 148 and 150 are rotated together with the pinions 144 and 146. Therefore, the cams 160 with the eccentric pins 162 rotate. At this time, since the top end of the eccentric pins 162 are stationarily held by engagement with the aperture 166 of the base plate 106, and the cams 160 are not displaceable relative to the movable base plate 110, the movable base plate 110 is driven in a direction determined by the angular displacement of the pinions 144 and 146. Therefore, by adjusting the magnitude of the shift of the rack plate 152, the tilt direction of the rotor 12 can be determined.

In addition, a sensor 174 is provided adjacent to the guide plate 118. The sensor 174 detects the object to be transferred approaching the guide plate 118, and produces a sensor signal which triggers a control circuit to start driving the drive motor 120 and activation of the actuation cylinder 170 to tilt the rotors 12 to the tilt direction corresponding to the transfer direction of the object.

During operation, the objects are transported in the direction Ta of Figure 5 by the upstream conveyor 102 and enter the transporting direction controlling station 100. At this time, the drive motor 120 is not driven, and the actuation cylinder 170 is deactivated, so the movable plate 110 is at the initial position. The object moves in the transporting direction controlling station 100 to reach the sensor 174 which produces the sensor signal to start driving of the drive motor 120 to rotate the rotors 12 and actuate the actuation cylinder 170 to tilt the rotors 12 into the direction corresponding to the direction Tb. The transporting direction is thus translated to the right with respect to the direction Ta. Therefore, assuming the rotors 12 are driven in the clockwise direction in Figure 6, the rotors 12 have to be tilted so that the contact points 50 contact the bottom surface of the object at the rightmost positions in Figure 6. To obtain this tilt direction of the rotors 12, the movable plate 110 has to be shifted towards the upstream conveyor 102 by the actuation cylinder 170, so that the force in the direction Tb is exerted on the objects to drive them towards the downstream conveyor 104.

If the object supply speed to the transporting direction controlling station 100 is excessively high, the actuation cylinder 114 is activated to block the objects in order to give appropriate intervals between the objects.

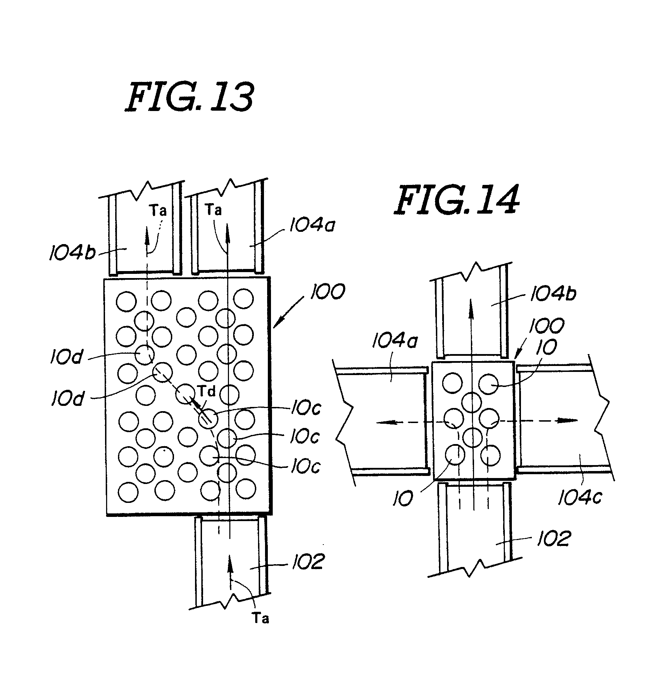

In the above system the transporting direction is changed through a right angle, but the invention is not so limited. For example, Figures 12 to 15 show various arrangements of transporting direction controlling station 100.

In the example of Figure 12, the transporting direction is reversed, so the objects perform a U-turn, at the transporting direction controlling station 100 between the upstream and downstream conveyors 102 and 104 which are parallel to each other. In this case, the first group of rotors 10a exerts leftward force on the object and the second group of rotors 10b exerts backward force on the object.

In the example of Figure 13, the object transferred by the upstream conveyor 102 is selectively transferred to one of downstream conveyors 104a and 104b by the transporting direction controlling station 100. In this example, the downstream conveyor 104a is in alignment with the upstream conveyor 102. Therefore, when the object is to be transferred to the downstream conveyor 104a, the transporting direction controlling station 100 transfers the object straight on. On the other hand, when the object is to be transferred to the downstream conveyor 104b, then a first group of rotors 10c are tilted to translate the transporting direction from the direction Ta to the direction Td, and a second group of rotors 10d are tilted to switch the transporting direction from the direction Td to the direction Ta.

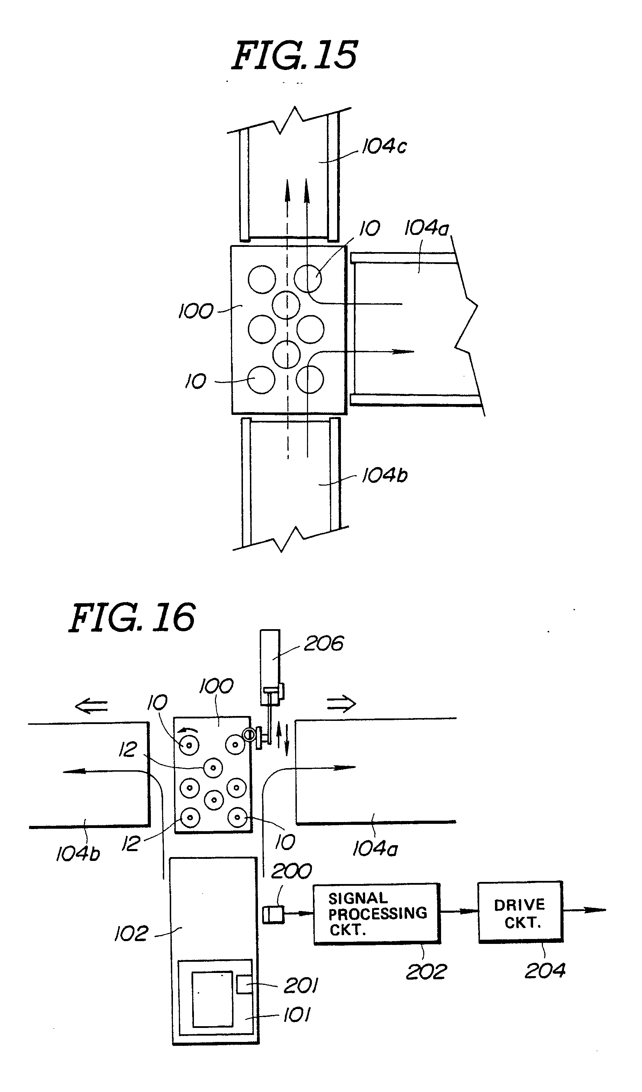

In the example of Figure 14, the object transferred by the upstream conveyor 102 is transferred to one of the downstream conveyors 104a, 104b and 104c. On the other hand, in the example of Figure 15, the transporting direction controlling station 100 is provided at a T-junction in the conveyor system to feed the object between three conveyors 104a, 104b and 104c. In these cases, the tilt directions of the rotors 12 will be adjusted to obtain the required feed directions.

Figure 16 shows an embodiment of conveyor system according to the present invention which has a similar conveyor arrangement to that of Figure 15. In this embodiment, the object transferred by the upstream conveyor 102 is checked at a checking station located upstream of the T-junction where the transporting direction controlling station 100 is provided. In the checking station, checking of respective objects transferred by the upstream conveyor 102 is performed, for example, using optically readable markings, such as bar-codes, on each object. The marking may indicate whether the objects are good or not. If the object is good, it is transferred to the downstream conveyor 104b.

In order to read the marking on the objects, an optical reader or other appropriate sensor 200 is provided adjacent to the upstream conveyor 102 at a location adjacent to the transporting direction controlling station 100. The sensor 200 reads the data in the marking and feeds the sensor signal to a signal processing circuit 202. The signal processing circuit 202 processes the sensor signal to make a judgement whether the object is good or not. Based on the result of the judgement, the signal processing circuit 202 supplies a transfer direction control signal to a drive circuit 204 for an actuation cylinder 206. The actuation cylinder 206 is designed for adjusting the tilt direction of the rotors 12 substantially as described above. Therefore, good and not good objects are selectively transferred to a corresponding one of the conveyors 104a and 104b.

## Claims

1. A conveyor system for conveying an object, the system comprising a first conveyor (102) and a transporting direction controlling device (100), which device (100) comprises:

   rotor means (12), rotatable about a rotation axis, for conveying said object, said rotor means (12) having an upper surface substantially perpendicular to said rotation axis and having a point (50) on said upper surface (14) to contact said object, said rotation axis being angularly offsettable for determining the orientation of said point (50);

   driving means for rotatably driving said rotor means (12); and

   means (16, 22) for controlling the inclination of said upper surface (14) of said rotor means (12) so determining the orientation of said point (50) on said upper surface (14) and hence the direction in which said rotor means (12) conveys said object;

   characterized by:

   means (200) associated with said first conveyor (102) and located upstream of said direction controlling device (100) for reading direction-determining data on said object; and circuit means (202, 204) for controlling said inclination controlling means (16, 22) in dependence on said read data, so controlling the direction in which said direction controlling device (100) conveys said object (101) in dependence on said read data.

2. A system according to claim 1 wherein said inclination controlling means (16, 22) includes a rotor shaft (16) rotatably supporting said rotor means (12), said rotor shaft (16) being tiltable about the vertical axis for tilting said upper surface (14).

3. A system according to claim 2 wherein said rotor shaft (16) is rotatable with said rotor means (12) and is rotatably supported on a stationary member (10) by a first bearing (20) and on a movable member (22) by a second bearing (24), said movable member (22) being movable relative to said stationary member (18) for causing displacement of said second bearing (24) relative to said first bearing (20) for causing change of the tilt direction of said rotor shaft (16).

4. A system according to claim 3 wherein said rotor shaft (16) carries a pulley (44) connected to a drive motor via a driving belt (46).

5. A system according to any one of the preceding claims further comprising second and third conveyors (104a, 104b) each located downstream of said direction controlling device (100) and extending in respective different directions therefrom, and wherein said direction controlling device (100) selectively conveys said object from said first conveyor (102) to said second conveyor (104a) or to said third conveyor (104b) in dependence on said read data.

**Revendications**

1. Système de convoyeur pour convoyer un objet, ce système comprenant un premier convoyeur (102) ainsi qu'un dispositif de commande de direction de transport (100), ce dispositif (100) comprenant :
   un moyen de rotor (12) qui peut tourner autour d'un axe de rotation pour convoyer l'objet, ce moyen de rotor (12) ayant une surface supérieure sensiblement perpendiculaire à l'axe de rotation et ayant un point (50) situé sur la surface supérieure (14) qui permet une mise en contact avec l'objet, cet axe de rotation pouvant être décalé d'un certain angle pour déterminer l'orientation du dit point (50) ;
   un moyen d'entraînement pour entraîner en rotation le moyen de rotor (12) ; et
   un moyen (16, 22) pour commander l'inclinaison de la surface supérieure (14) du moyen de rotor (12) de manière à déterminer l'orientation du dit point (50) situé sur la surface supérieure (14), et par voie de conséquence, la direction suivant laquelle le moyen de rotor (12) convoie l'objet ;
   caractérisé par :
   un moyen (200) associé au premier convoyeur (102) et localisé en amont du dispositif de commande de direction (100) pour lire les données qui permettent de déterminer la direction liée à l'objet ; et
   un moyen de circuit (202, 204) pour commander le moyen de commande de l'inclinaison (16, 22) en fonction des données lues de manière à commander la direction suivant laquelle le dispositif de commande de direction (100) convoie l'objet en fonction des données lues.

2. Système selon la revendication 1, dans lequel le moyen de commande de l'inclinaison (16, 22) comporte un arbre de rotor (16) qui supporte à rotation le moyen de rotor (12), l'arbre de rotor (16) pouvant être incliné par rapport à l'axe vertical pour incliner la surface supérieure (14).

3. Système selon la revendication 2, dans lequel l'arbre de rotor (16) peut être mis en rotation par le moyen de rotor (12) et est supporté à rotation sur un élément fixe (10) au moyen d'un premier palier (20) et sur un élément mobile (22) au moyen d'un second palier (24), l'élément mobile (22) étant mobile par rapport à l'élément fixe (18) pour provoquer un déplacement du second palier (24) par rapport au premier palier (20) afin d'engendrer une modification de la direction de l'inclinaison de l'arbre de rotor (16).

4. Système selon la revendication 3, dans lequel l'arbre de rotor (16) porte une poulie (44) reliée à un moteur d'entraînement par l'intermédiaire d'une courroie d'entraînement (46).

5. Système selon l'une quelconque des revendications précédentes, ce système comprenant en outre des second et troisième convoyeurs (104a, 104b), chacun étant localisé en aval du dispositif de commande de direction (100) et s'étendant suivant des directions respectives différentes par rapport à ce dispositif, et dans lequel le dispositif de commande de direction (100) convoie de manière sélective l'objet depuis le premier convoyeur (102) jusqu'au second convoyeur (104a) ou jusqu'au troisième convoyeur (104b) en fonction des données lues.

## Ansprüche

1. Fördersystem zum Fördern eines Gegenstandes, das einen ersten Förderer (102) und eine Förderrichtungs-Kontrolleinrichtung (100) umfaßt, letztere mit:
   einer um eine Rotationsachse drehbaren Rotoreinrichtung (12) zum Fördern des Gegenstandes, die eine zur Rotationsachse im wesentlichen senkrechte obere Fläche und eine Stelle (50) auf dieser oberen Fläche (14) für den Kontakt mit dem Gegenstand aufweist, wobei die Rotationsachse zwecks Bestimmung der Orientierung dieser Stelle (50) winkelversetzbar ist,
   einer Antriebseinrichtung für den Drehantrieb der Rotoreinrichtung (12), und
   einer Einrichtung (16,22) zum Einstellen der Neigung der oberen Fläche (14) der Rotoreinrichtung (12) und somit zum Bestimmen der Orientierung der Stelle (50) auf der oberen Fläche (14) und folglich der Richtung, in der die Rotoreinrichtung (12) den Gegenstand fördert,
   **gekennzeichnet** durch
   eine dem ersten Förderer (102) zugeordnete und bahnaufwärts der Förderrichtungs-Kontrolleinrichtung (100) angeordnete Einrichtung (200) zum Ermitteln von Richtungsbestimmungsdaten am Gegenstand, und
   eine Schaltungseinrichtung (202,204) zum Steuern der Neigungs-Einstelleinrichtung (16,22) in Abhängigkeit von den ermittelten Daten und somit zum Steuern der Richtung, in der die Förderrichtungs-Kontrolleinrichtung (100) den Gegenstand (101) in Abhängigkeit dieser ermittelten Daten fördert.

2. Fördersystem nach Anspruch 1, in welchem die Neigungs-Einstelleinrichtung (16,22) einen die Rotoreinrichtung (12) drehbar abstützenden Rotorschaft (16) aufweist, der zum Kippen der oberen Fläche (14) um die Vertikalachse kippbar ist.

3. Fördersystem nach Anspruch 2, in welchem der Rotorschaft (16) mit der Rotoreinrichtung (12) drehbar und mittels eines ersten Lagers (20) auf einem ortsfesten Glied (10) und mittels eines zweiten Lagers (24) auf einem beweglichen Glied (22) drehbar abgestützt ist, wobei das bewegliche Glied (22) relativ zum ortsfesten Glied (18) zwecks Verschiebung des zweiten Lagers (24) relativ zum ersten Lager (20) zur Änderung der Kipprichtung des Rotorschaftes (16) bewegbar ist.

4. Fördersystem nach Anspruch 3, in welchem der Rotorschaft (16) eine Laufrolle (44) trägt, die über einen Treibriemen (46) mit einem Antriebsmotor verbunden ist.

5. Fördersystem nach einem der vorhergehenden Ansprüche, das ferner einen zweiten und dritten Förderer (104a,104b) umfaßt, deren jeder bahnabwärts der Förderrichtungs-Kontrolleinrichtung (100) angeordnet ist und sich von dieser in jeweils unterschiedlichen Richtungen erstreckt, und wobei die Förderrichtungs-Kontrolleinrichtung (100) den Gegenstand vom ersten Förderer (102) selektiv in Abhängigkeit von den ermittelten Daten zum zweiten Förderer (104a) oder zum dritten Förderer (104b) fördert.

**FIG. 1**

**FIG. 2**

**FIG. 4**

# FIG.3(A)

# FIG.3(B)

# FIG.3(C)

# FIG.3(D)

# FIG.5

# FIG.12

# FIG.6

EP 0 249 430 B1

**FIG.7**

# FIG.8

# FIG.9

## FIG.10

## FIG.11

# FIG.13

# FIG.14

## FIG. 15

## FIG. 16

SIGNAL PROCESSING CKT.

DRIVE CKT.